# EUROPEAN PATENT APPLICATION

(11) **EP 4 621 972 A1**
(43) Date of publication of application: **24.09.2025**
(21) Application number: 23927915.1
(22) Date of filing: 17.03.2023
(51) Int. Cl.: H01M 50/449, H01M 50/489

(54) **SEPARATOR, SECONDARY BATTERY, AND ELECTRIC APPARATUS**

(71) Applicant: Contemporary Amperex Technology (Hong Kong) Limited, Hong Kong (HK)
(72) Inventor: WANG, Zhaoguang, Ningde, Fujian 352100 (CN); YANG, Jianrui, Ningde, Fujian 352100 (CN); SUN, Chengdong, Ningde, Fujian 352100 (CN); HUANG, Siying, Ningde, Fujian 352100 (CN); OUYANG, Chuying, Ningde, Fujian 352100 (CN); HAN, Chongwang, Ningde, Fujian 352100 (CN)
(74) Representative: Ran, Handong
(86) International application number: PCT/CN2023/082339
(87) International publication number: WO 2024/192596

(57) **Abstract**

Provided in the present application is a separator, comprising: a first base membrane and a second base membrane, wherein the melting point of the second base membrane is lower than the melting point of the first base membrane, the puncture strength of the second base membrane is 220 gf to 460 gf, and the puncture strength of the separator is 330 gf to 620 gf. When the puncture strengths of the first base membrane and the separator are within the above-mentioned selected ranges, the reliability of a secondary battery can be improved.

## Description

### TECHNICAL FIELD

This application pertains to the technical field of secondary batteries, and specifically relates to a separator, a secondary battery, and an electric apparatus.

### BACKGROUND

Secondary batteries have been widely used in various consumer electronic products and electric vehicles due to their prominent advantages such as light weight, no pollution, and no memory effect. With the continuous development of the new energy industry, users have higher demands for the reliability of secondary batteries.

Therefore, how to make secondary batteries more reliable is a problem that needs to be urgently addressed.

### SUMMARY

Given the technical problems existing in the background, this application provides a separator, a secondary battery, and an electric apparatus, aiming to improve the reliability of the secondary battery.

To achieve the above objective, according to a first aspect, this application provides a separator, including a first base film and a second base film, where a melting point of the second base film is lower than a melting point of the first base film; a puncture strength of the second base film is 220 gf-460 gf, and a puncture strength of the separator is 330 gf-620 gf.

Compared with the prior art, this application includes at least the following beneficial effects: in the separator provided in this application, the melting point of the second base film is lower than the melting point of the first base film, and the puncture strength of the second base film and the puncture strength of the separator are selected within the specified ranges, allowing the separator to have various degrees of puncture resistance capability, where the puncture resistance capability on one side differs from the puncture resistance capability on the other side. This feature, in response to uneven dendrites in the battery, can prevent the dendrites from penetrating the separator and causing a short circuit, thereby improving the reliability of the secondary battery.

In any embodiment of this application, a ratio of a puncture strength of the first base film to the puncture strength of the second base film is 0.2-0.95, optionally 0.3-0.75. When the ratio of the puncture strength of the first base film to the puncture strength of the second base film satisfies the above conditions, the separator has good puncture resistance and can balance other performance, thereby further improving the reliability of the secondary battery.

In any embodiment of this application, the puncture strength of the first base film is 100 gf-220 gf; and the puncture strength of the second base film is 260 gf-400 gf. When the puncture strength of the first base film and/or the puncture strength of the second base film satisfies the above condition, the separator has good puncture resistance, further improving the reliability of the secondary battery.

In any embodiment of this application, the separator satisfies at least one of the following conditions (1) to (4):
(1) a transverse elongation at break of the first base film is 50%-200%, optionally 60%-160%;
(2) a longitudinal elongation at break of the first base film is 40%-700%, optionally 80%-600%;
(3) a transverse elongation at break of the second base film is 40%-220%, optionally 80%-170%; and
(4) a longitudinal elongation at break of the second base film is 30%-100%, optionally 40%-85%.

When at least one of the above (1) to (4) of the separator falls within the given range, the puncture resistance of the separator is better, thereby further improving the reliability of the secondary battery.

In any embodiment of this application, an average fiber diameter of the first base film is 60 nm-300 nm, optionally 80 nm-200 nm; and/or an average fiber diameter of the second base film is 40 nm-350 nm, optionally 70 nm-180 nm. The average fiber diameter of the first base film and/or the average fiber diameter of the second base film meeting the above range helps to ensure that the puncture strength of the base film and the puncture strength of the separator are within the ranges of this application, and that the separator has good tensile performance, thereby further improving the reliability of the secondary battery.

In any embodiment of this application, the melting point of the first base film is 155°C-360°C, optionally 160°C-335°C, and/or the melting point of the second base film is 125°C-260°C, optionally 130°C-220°C. Limiting the melting point of the first base film and the melting point of the second base film within the above ranges ensures that the first base film and the second base film have good puncture resistance while also having good heat resistance.

In any embodiment of this application, a relative molecular mass of a material of the first base film is 400,000-1,800,000, optionally 500,000-1,300,000; and/or a relative molecular mass of a material of the second base film is 300,000-1,500,000, optionally 400,000-1,100,000. When the relative molecular mass of the first base film and the relative molecular mass of the second base film satisfy the above conditions, the separator has good puncture resistance, further improving the reliability of the secondary battery.

In any embodiment of this application, the thickness of the first base film is greater than or equal to the thickness of the second base film. Optionally, the ratio of the thickness of the first base film to the thickness of the second base film is 1.02-5, preferably 1.1-3.0.

In any embodiment of this application, a thickness of the first base film is 2 µm-14 µm, optionally 3 µm-9 µm, and a thickness of the second base film is 2 µm-12 µm, optionally 3 µm-7 µm.

When the thickness of the first base film and/or the thickness of the second base film satisfies the above condition, the separator has better puncture resistance, thereby further improving the reliability of the secondary battery and also increasing the energy density of the battery.

In any embodiment of this application, an intermediate layer is further provided between the first base film and the second base film, the intermediate layer is disposed between the first base film and the second base film, and the intermediate layer includes a binder. Optionally, the intermediate layer further includes filler particles. Optionally, the filler particles include at least one type of particles among inorganic particles, organic particles, and organic-metal framework materials. The intermediate layer being arranged between the first base film and the second base film not only compensates for the process defects during the hot pressing lamination process but also further improves the physical property stability of the separator, thereby further improving the reliability of the secondary battery.

In any embodiment of this application, the binder includes one or more of polyacrylate, polyacrylic acid, polytetrafluoroethylene, polyvinylidene difluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl branched starch. When the intermediate layer is provided between the first base film and the second base film and the binder in the intermediate layer includes the above components, the reliability of the secondary battery can be improved.

In any embodiment of this application, the separator satisfies at least one of the following (1) to (5):
(1) the puncture strength of the separator is 330 gf-630 gf, optionally 400 gf-600 gf;
(2) a transverse tensile strength of the separator is ≥ 700 kg/cm², optionally 1000 kg/cm²-1900 kg/cm²;
(3) a longitudinal tensile strength of the separator is ≥ 1000 kg/cm², optionally 1200 kg/cm²-2200 kg/cm²;
(4) a transverse thermal shrinkage rate of the separator at 250°C for 1 h is ≤ 3%, optionally ≤ 2.0%; and
(5) a longitudinal thermal shrinkage rate of the separator at 250°C for 1 h is ≤ 3%, optionally ≤ 2.0%.

When at least one of the above (1) to (5) of the separator satisfies the given range, the separator has better puncture resistance, thereby improving the reliability of the secondary battery.

According to a second aspect, this application provides a secondary battery, including the separator according to the first aspect of this application. When the secondary battery uses the given separator, the reliability of the secondary battery can be improved.

In any embodiment of this application, the secondary battery further includes a positive electrode plate and a negative electrode plate, the separator is arranged between the positive electrode plate and the negative electrode plate, and the second base film of the separator faces the negative electrode plate.

The second base film of the separator faces the negative electrode plate, and the second base film has high puncture strength, which can enhance the effect of resisting lithium dendrite puncture, further improving the reliability of the secondary battery.

According to a third aspect, this application provides an electric apparatus, including the secondary battery according to the second aspect of this application. When the secondary battery of the electric apparatus uses the separator, the reliability of the electric apparatus can be improved.

Because the apparatus of this application includes the secondary battery provided by this application, it at least has the same advantages as the secondary battery.

### BRIEF DESCRIPTION OF DRAWINGS

To describe the technical solutions of the embodiments of this application more clearly, the following briefly describes the accompanying drawings required for describing this application. Apparently, the accompanying drawings in the following descriptions show merely some embodiments of this application, and persons of ordinary skill in the art may still derive other drawings from the accompanying drawings without creative efforts.
FIG. 1 is a schematic structural diagram of a separator according to an embodiment of this application.
FIG. 2 is a schematic structural diagram of a separator according to another embodiment of this application.
FIG. 3 is a schematic diagram of a secondary battery according to an embodiment.
FIG. 4 is an exploded view of FIG. 3.
FIG. 5 is a schematic diagram of a battery module according to an embodiment.
FIG. 6 is a schematic diagram of a battery pack according to an embodiment.
FIG. 7 is an exploded view of FIG. 6.
FIG. 8 is a schematic diagram of an apparatus using a secondary battery as a power source according to an embodiment.

### DESCRIPTION OF EMBODIMENTS

The following further describes this application with reference to specific embodiments. It should be understood that these specific embodiments are merely intended to describe this application instead of limiting the scope of this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

In the description of this specification, unless otherwise specified, the term "or (or)" is inclusive. That is, the phrase "A or (or) B" means "A, B, or both A and B". More specifically, any one of the following conditions satisfies the condition "A or B": Ais true (or present) and B is false (or not present); A is false (or not present) and B is true (or present); or both A and B are true (or present).

In the description of this specification, it should be noted that "more than" and "less than" are inclusive of the present number and that "more" in "one or more" means two or more than two, unless otherwise specified.

Unless otherwise specified, the terms used in this application have well-known meanings as commonly understood by persons skilled in the art. Unless otherwise specified, numerical values of parameters mentioned in this application may be measured by using various measurement methods commonly used in the art (for example, they may be tested by using the methods provided in some embodiments of this application).

### Secondary battery

A secondary battery is a battery that can be charged after being discharged to activate active materials for continuous use.

Generally, the secondary battery includes a positive electrode plate, a negative electrode plate, a separator, and an electrolyte. During charging and discharging of the battery, active ions are intercalated and deintercalated back and forth between the positive electrode plate and the negative electrode plate. The separator is provided between the positive electrode plate and the negative electrode plate for separation. The electrolyte conducts ions between the positive electrode plate and the negative electrode plate.

### [Separator]

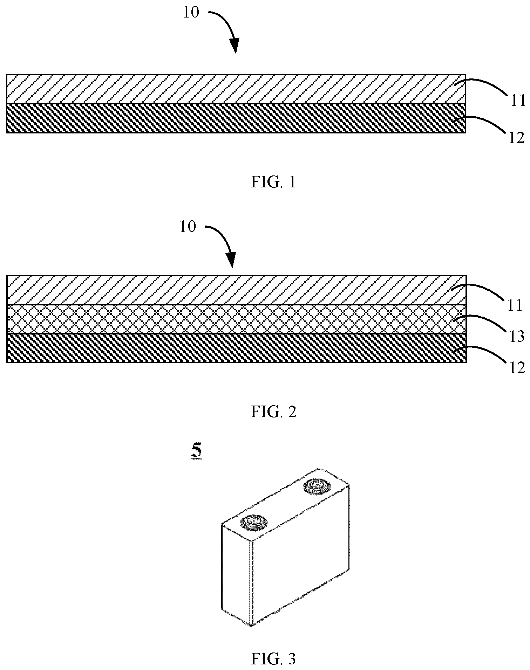

Referring to FIG. 1, an embodiment of this application provides a separator 10, including a first base film 11 and a second base film 12. A melting point of the second base film 12 is lower than a melting point of the first base film 11. Puncture strength of the second base film 12 is 220 gf-460 gf, and puncture strength of the separator 10 is 330 gf-620 gf.

Without being limited to any theory, the inventors have found through extensive research that in the separator with the specific structure of this application, when both the puncture strength of the second base film with a low melting point and the puncture strength of the separator are within the above specific ranges, the puncture resistance of the separator can be enhanced using specific base films in the separator, thereby improving the ability to resist dendrite penetration. Typically, dendrite formation occurs on the negative electrode side, necessitating higher puncture resistance in the separator. In contrast, the demand for puncture resistance on the positive electrode side is comparatively lower. However, the positive electrode side may impose higher requirements for other performance characteristics, such as heat resistance, to mitigate the risk of thermal breakdown. Therefore, the excellent performance of the separator can be achieved using the second base film, to enhance the puncture resistance of the separator, and the first base film can be used to balance and adjust other performance of the separator, such as heat resistance, air permeability, and oxidation resistance, thereby improving the overall performance of the separator and improving the reliability of the secondary battery.

The inventors have further discovered that if the separator further optionally satisfies one or more of the following designs, the performance of the battery can be further improved.

In any embodiment of this application, a ratio of puncture strength of the first base film 11 to the puncture strength of the second base film 12 is 0.2-0.95, optionally 0.3-0.75. For example, the ratio of the puncture strength of the first base film 11 to the puncture strength of the second base film 12 is optionally 0.2, 0.3, 0.32, 0.41, 0.48, 0.52, 0.54, 0.66, 0.71, 0.75, 0.85, 0.89, 0.92, or 0.95, or falls within a range defined by any two of these values, for example, 0.2-0.32, 0.3-0.75, 0.41-0.54, 0.48-0.66, 0.71-0.89, or 0.92-0.95. When the ratio of the puncture strength of the first base film to the puncture strength of the second base film satisfies the above conditions, the puncture resistance and heat resistance of the first base film and the second base film can be balanced, thereby further improving the reliability of the secondary battery.

In any embodiment of this application, the puncture strength of the first base film 11 is 100 gf-220 gf; and/or the puncture strength of the second base film 12 is 260 gf-400 gf. For example, the puncture strength of the first base film 11 is optionally 100 gf, 102 gf, 114 gf, 120 gf, 126 gf, 133 gf, 139 gf, 140 gf, 164 gf, 190 gf, or 220 gf, or falls within a range defined by any two of these values, for example, 100 gf-133 gf, 90 gf-114 gf, 120 gf-126 gf, 133 gf-164 gf, or 190 gf-220 gf. The puncture strength of the second base film 12 is optionally 260 gf, 267 gf, 277 gf, 300 gf, 323 gf, 339 gf, 361 gf, 370 gf, or 400 gf, or falls within a range defined by any two of these values, for example, 260 gf-300 gf, 323 gf-361 gf, or 361 gf-400 gf. When the puncture strength of the first base film and/or the puncture strength of the second base film satisfies the above condition, the puncture resistance and heat resistance of the first base film and the second base film can be balanced. Other performance can be balanced while the first base film and the second base film have good puncture resistance, thereby improving the reliability of the secondary battery.

The puncture strength of the base film or separator has a well-known meaning in the art and may be tested using equipment and methods known in the art. For example, the puncture strength may be tested according to the standard: GB/T 10004-2008. Specifically, a sample to be tested may be cut into strips, where the width of the strip sample is 100 mm. The 100 mm-wide test piece is mounted on a sample film fixing clamp ring, a steel needle with a diameter of 1.0 mm and a tip radius of 0.5 mm is used to puncture at a speed of (50±5) mm/min, and the maximum load of the steel needle penetrating the test piece is read. Usually, 5 parallel test samples may be taken simultaneously, each test sample is measured at 3 points, and the arithmetic mean value is determined as the final puncture strength.

In any embodiment of this application, the separator 10 satisfies at least one of the following (1) to (4):
(1) a transverse elongation at break of the first base film 11 is 50%-200%, optionally 60%-160%;
(2) a longitudinal elongation at break of the first base film 11 is 40%-700%, optionally 80%-600%;
(3) a transverse elongation at break of the second base film 12 is 40%-220%, optionally 80%-170%; and
(4) a longitudinal elongation at break of the second base film 12 is 30%-100%, optionally 40%-85%.

When at least one of the above (1) to (4) of the separator falls within the given range, the puncture resistance of the separator is better, thereby further improving the reliability of the secondary battery.

Those skilled in the art know that the puncture strength of the base film may be adjusted by adjusting the intrinsic parameters of the base film (for example, one or more of the average fiber diameter of the base film and the relative molecular mass of the base film material). Those skilled in the art can adjust the swelling rate of the base film within the parameter ranges given in this application by known methods, for example, adjusting the production process of the base film (controlling the average fiber diameter of the base film, the relative molecular mass of the base film material, or the like), and conduct a limited number of trials to obtain the base film with desired puncture strength.

In any embodiment of this application, an average fiber diameter of the first base film 11 is 60 nm-300 nm, optionally 80 nm-200 nm; and/or an average fiber diameter of the second base film 12 is 40 nm-350 nm, optionally 70 nm-180 nm.

The average fiber diameter of the first base film 11 may be 60 nm, 70 nm, 75 nm, 80 nm, 96 nm, 100 nm, 124 nm, 140 nm, 172 nm, 189 nm, 200 nm, 216 nm, 238 nm, 250 nm, 264 nm, 270 nm, 283 nm, or 300 nm, or falls within a range defined by any two of these values, for example, 60 nm-75 nm, 70 nm-100 nm, 124 nm-189 nm, 172 nm-238 nm, 264 nm-270 nm, or 283 nm-300 nm. In some embodiments, the average fiber diameter of the first base film 11 may be 80 nm-200 nm.

The average fiber diameter of the second base film 12 may be 40 nm, 64 nm, 70 nm, 89 nm, 100 nm, 119 nm, 142 nm, 157 nm, 180 nm, 196 nm, 224 nm, 265 nm, 274 nm, 290 nm, 300 nm, 315 nm, 324 nm, 330 nm, 339 nm, 341 nm, or 350 nm, or falls within a range defined by any two of these values, for example, 119 nm-157 nm, 157 nm-196 nm, 224 nm-265 nm, 274 nm-315 nm, 300 nm-330 nm, 330 nm-341 nm, or 341 nm-350 nm. In some embodiments, the average fiber diameter of the second base film 12 may be 70 nm-100 nm.

The average fiber diameter of the first base film and/or the average fiber diameter of the second base film meeting the above range helps to ensure that the puncture strength of the base film and the puncture strength of the separator are within the ranges of this application, and that the separator has good tensile performance, thereby further improving the reliability of the secondary battery.

The average fiber diameter of the base film has a well-known meaning in the art and may be tested using known equipment and methods. For example, a scanning electron microscope (for example, ZEISS Sigma 300) is used, with reference to JY/T010-1996, to obtain a scanning electron microscope (SEM) image of the base film. Specifically, a test sample with a length×width of 5 mm×5 mm is randomly selected from the base film, multiple test areas (for example, 5) are randomly selected from the test sample, and the fiber diameter is observed at a certain magnification (for example, 10000 times). A scale is used to select multiple positions (for example, at least 30) for measurement, and the average value of multiple fiber diameters is calculated as the average fiber diameter of the base film.

In any embodiment of this application, the melting point of the first base film 11 is 155°C-360°C, optionally 160°C-335°C, and/or the melting point of the second base film 12 is 125°C-260°C, optionally 130°C-220°C.

The melting point of the first base film 11 may be 155°C, 159°C, 160°C, 170°C, 186°C, 190°C, 212°C, 235°C, 246°C, 264°C, 279°C, 281°C, 312°C, 345°C, 355°C, or 360°C, or falls within a range defined by any two of these values, for example, 155°C-170°C, 186°C-212°C, 235°C-279°C, 160°C-335°C, 281°C-312°C, or 345°C-360°C.

The melting point of the second base film 12 is 125°C, 135°C, 153°C, 171°C, 196°C, 200°C, 224°C, 235°C, or 260°C, or falls within a range defined by any two of these values, for example, 125°C-135°C, 153°C-196°C, 130°C-220°C, 196°C-00°C, or 224°C-260°C.

Limiting the melting point of the first base film and the melting point of the second base film within the above ranges ensures that the first base film and the second base film have good puncture resistance while also having good heat resistance.

The melting points of the first base film and the second base film may be tested using equipment and methods known in the art. For example, differential scanning calorimetry may be used for the measurement. Specifically, refer to the standard GB/T 19466.3-2004. As an example, the measurement can be carried out as follows: 4-6 mg of the sample to be tested is taken and placed in a sample chamber of a differential scanning calorimeter. Then the temperature rises from 25°C to 400°C at a heating rate of 10°C/min, to obtain the melting endotherm curve of the sample, with the temperature corresponding to the peak value of the curve being the melting point of the sample.

In any embodiment of this application, a relative molecular mass of a material of the first base film 11 is 400,000-1,800,000, optionally 500,000-1,300,000; and/or a relative molecular mass of a material of the second base film 12 is 300,000-1,500,000, optionally 400,000-1,100,000.

The relative molecular mass of the material of the first base film 11 is optionally 400,000, 450,000, 460,000, 550,000, 640,000, 750,000, 960,000, 1,200,000, 1,370,000, 1,450,000, 1,540,000, 1,620,000, 1,710,000, 1,740,000, 1,780,000, or 1,800,000, or falls within a range defined by any two of these values, for example, 400,000-450,000, 450,000-750,000, 750,000-960,000, 1,200,000-1,370,000, 1,450,000-1,740,000, 1,740,000-1,780,000, or 1,780,000-1,800,000. In some embodiments, the relative molecular mass of the material of the first base film 11 may be 500,000-1,300,000.

The relative molecular mass of the material of the second base film 12 is optionally 300,000, 390,000, 490,000, 570,000, 640,000, 660,000, 800,000, 970,000, 1,030,000, 1,140,000, 1,240,000, 1,380,000, 1,410,000, 1,440,000, 1,480,000, or 1,500,000, or falls within a range defined by any two of these values, for example, 300,000-390,000, 570,000-660,000, 800,000-1,140,000, 1,140,000-1,440,000, or 1,440,000-1,500,000. In some embodiments, the relative molecular mass of the material of the second base film 12 may be 400,000-1,100,000.

The relative molecular mass of the base film material affects the final film formation state of the base film, which in turn affects the puncture strength of the base film. In addition to the puncture strength of the base film, the relative molecular mass of the material affects other performance such as the tensile strength of the material. As the relative molecular mass of the material of the first base film and the relative molecular mass of the material of the second base film are limited within the above ranges, the puncture strength of the first base film can be further enhanced, thereby reducing the probability of lithium dendrites puncturing the base film; and the support strength of the first base film to the second base film can be enhanced, thereby improving the reliability of the secondary battery.

The relative molecular mass of the base film has a well-known meaning in the art and may be tested using equipment and methods known in the art. For example, high-temperature GPC testing (a differential refractive index detector) may be performed.

In any embodiment of this application, the thickness of the first base film 11 is greater than or equal to the thickness of the second base film 12. Optionally, the ratio of the thickness of the first base film 11 to the thickness of the second base film 12 is 1.02-5, preferably 1.1-3.0. In some embodiments, the ratio of the thickness of the first base film 11 to the thickness of the second base film 12 is optionally 1.02, 1.1, 1.2, 1.4, 1.6, 2.2, 2.8, 3.0, 3.5, 3.9, 4.1, 4.4, 4.6, 4.8, or 5, or falls within a range defined by any two of these values, for example, 1.02-1.2, 1.4-2.2, 2.8-3.5, 1.1-3.0, 3.9-4.4, or 4.6-5.

In any embodiment of this application, the thickness of the first base film 11 is 2 µm-14 µm, optionally 3 µm-9 µm, and/or the thickness of the second base film 12 is 2 µm-12 µm, optionally 3 µm-7 µm.

The thickness of the first base film 11 is optionally 2 µm, 3.5 µm, 4 µm, 5 µm, 7 µm, 9 µm, 10 µm, 11 µm, 11.5 µm, 12 µm, 13.5 µm, or 14 µm, or falls within a range defined by any two of these values, for example, 2 µm-4 µm, 5 µm-10 µm, 10 µm-12 µm, or 12 µm-14 µm. In some embodiments, the thickness of the first base film 11 may be 3 µm-9 µm.

The thickness of the second base film 12 is optionally 2 µm, 3 µm, 4 µm, 5 µm, 6 µm, 7 µm, 8 µm, 9 µm, 10 µm, 11 µm, or 12 µm, or falls within a range defined by any two of these values, for example, 2 µm-4 µm, 5 µm-7 µm, 8 µm-9 µm, or 10 µm-12 µm. In some embodiments, the thickness of the second base film 12 may be 3 µm-7 µm.

When the thickness of the first base film and/or the thickness of the second base film satisfies the above condition, the separator has better puncture resistance, thereby improving the reliability of the secondary battery and also increasing the energy density of the battery.

The thickness of the base film may be tested using equipment and methods known in the art. For example, a lithium battery separator thickness meter may be used to qualitatively measure the thickness of the base film. Refer to GB/T6672 Determination of Thickness of Plastic Films and Sheets-Mechanical Measurement Method to conduct the test. Specifically, the following steps may be used: six sets of parallel samples are taken, a micrometer thickness meter is used to measure the thickness at different positions of each set of samples, at least 20 points are measured for each set of samples, and the average thickness of the six sets of samples is determined as the thickness of the base film.

The first base film 11 and the second base film 12 can be directly laminated by hot pressing. During the hot pressing lamination process, too high temperature causes low porosity and poor air permeability; and too low temperature causes poor adhesion between the first base film 11 and the second base film 12. Therefore, it is necessary to adjust the appropriate hot pressing temperature. Optionally, the hot pressing temperature is 20°C-50°C.

In any embodiment of this application, referring to FIG. 2, an intermediate layer 13 is further provided between the first base film 11 and the second base film 12, the intermediate layer 13 is disposed between the first base film 11 and the second base film 12, and the intermediate layer 13 includes a binder. Optionally, the intermediate layer 13 further includes filler particles. Optionally, the filler particles include at least one type of particles among inorganic particles, organic particles, and organic-metal framework materials. The intermediate layer being arranged between the first base film and the second base film not only compensates for the process defects during the hot pressing lamination process but also further improves the physical property stability of the separator, thereby improving the reliability of the secondary battery.

In any embodiment of this application, the binder includes one or more of polyacrylate, polyacrylic acid, polytetrafluoroethylene, polyvinylidene difluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl branched starch. When the intermediate layer is provided between the first base film and the second base film and the binder in the intermediate layer includes the above components, the reliability of the secondary battery can be improved.

Optionally, the inorganic particles include one or more types of particles among inorganic particles with a dielectric constant above 5, inorganic particles with ionic conductivity but not storing ions, and inorganic particles capable of undergoing electrochemical reactions.

Optionally, the inorganic particles with a dielectric constant above 5 may include at least one of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb(Zr,Ti)O3 (PZT for short), Pb1-mLamZr1-nTinO3 (PLZT for short, where 0<m<1, and 0<n<1), Pb(Mg3Nb2/3)O3-PbTiO3 (PMN-PT for short), and their respective modified inorganic particles. Optionally, a modification method for the inorganic particles may be chemical modification and/or physical modification. The chemical modification method includes coupling agent modification (for example, using a silane coupling agent, or a titanate coupling agent), surfactant modification, polymer graft modification, and the like. The physical modification method may include mechanical force dispersion, ultrasonic dispersion, high-energy treatment, and the like. Modification treatment can reduce the agglomeration of inorganic particles, such that the adhesive layer has a more stable and uniform structure. In addition, selecting coupling agents, surfactants, or polymers with specific functional groups to modify the inorganic particles helps to enhance the wettability and retention characteristics of the adhesive layer to the electrolyte, and improve the adhesion of the adhesive layer to the first base film and the second base film.

Optionally, the inorganic particles with ionic conductivity but not storing ions include at least one of Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3}, and P₂S₅ type glass Liₓ₈P_{y8}S_{z4}, where 0<x1<2, 0<y1<3, 0<x2<2, 0<y2<1, 0<z1<3, 0<x3<4, 0<y3<13, 0<x4<2, 0<y4<3, 0<x5<4, 0<y5<1, 0<z2<1, 0<w<5, 0<x6<4, 0<y6<2, 0<x7<3, 0<y7<2, 0<z3<4, 0<x8<3, 0<y8<3, and 0<z4<7. In this way, the ionic conductivity of the separator can be further increased.

Optionally, the inorganic particles capable of electrochemical reactions may include at least one of lithium-containing transition metal oxide, lithium-containing phosphate, a carbon-based material, a silicon-based material, a tin-based material, and a lithium titanium compound.

Optionally, the organic particles may include one or more of polycarbonate, polythiophene, polypyridine, polystyrene, polyacrylic wax, polyethylene, polypropylene, cellulose, cellulose modifiers (for example, carboxymethyl cellulose), melamine resin, phenolic resin, polyester (for example, polyethylene terephthalate, polyethylene naphthalate, polybutylene terephthalate), organic silicon resin, polyimide, polyamide-imide, polyarylamide, polyphenylene sulfide, polysulfone, polyether sulfone, polyether ether ketone, polyarylether ketone, and copolymer of butyl acrylate and ethyl methacrylate (for example, crosslinked polymer of butyl acrylate and ethyl methacrylate).

Optionally, the organic-metal framework materials may include one or more of a nitrogen-containing heterocyclic ligand structure, an organic carboxylic acid ligand structure, and a nitrogen-oxygen mixed ligand structure.

In some embodiments, a percentage of the binder may be greater than or equal to 10%, optionally 10%-30%, based on a total weight of the adhesive layer.

In some embodiments, a percentage of the filler may be less than or equal to 90%, optionally 40%-90% or 60%-80%, based on a total weight of the adhesive layer.

In some embodiments, the intermediate layer may further include a dispersant, such as carboxymethyl cellulose, thereby adjusting the viscosity of the intermediate layer slurry and improving the quality and uniformity of the intermediate layer.

In some embodiments, a percentage of the dispersant may be less than or equal to 25%, optionally less than or equal to 20%, based on the total weight of the adhesive layer.

In any embodiment of this application, the separator 10 satisfies at least one of the following (1) to (5):
(1) the puncture strength of the separator is 330 gf-630 gf, optionally 400 gf-600 gf;
(2) transverse tensile strength of the separator is ≥ 700 kg/cm², optionally 1000 kg/cm²-1900 kg/cm²;
(3) longitudinal tensile strength of the separator is ≥ 1000 kg/cm², optionally 1200 kg/cm²-2200 kg/cm²;
(4) a transverse thermal shrinkage rate of the separator 10 at 250°C for 1 h is ≤ 3%, optionally ≤ 2.0%; and
(5) a longitudinal thermal shrinkage rate of the separator 10 at 250°C for 1 h is ≤ 3%, optionally ≤ 2.0%.

When at least one of the above (1) to (5) of the separator satisfies the given range, the separator has better puncture resistance, thereby improving the reliability of the secondary battery.

The transverse tensile strength, longitudinal tensile strength, transverse thermal shrinkage rate, and longitudinal thermal shrinkage rate of the base film or separator all have well-known meanings in the art and can be tested using equipment and methods known in the art. For example, all of them may be measured with reference to GB/T 36363-2018.

If there is no special explanation, all the raw materials used in the separator (for example, the first base film, the second base film, the binder, and the filler) may be purchased commercially.

### [Positive electrode plate]

In the secondary battery, the positive electrode plate generally includes a positive electrode current collector and a positive electrode film layer provided on the positive electrode current collector, where the positive electrode film layer includes a positive electrode active material.

The positive electrode current collector may be a common metal foil sheet or a composite current collector (the composite current collector may be made by providing a metal material on a polymer matrix). As an example, an aluminum foil may be used as the positive electrode current collector.

A specific type of the positive electrode active material is not limited. An active material known in the art can be used as the positive electrode of the secondary battery, and those skilled in the art may select an active material based on actual needs.

As an example, the positive electrode active material may include but is not limited to one or more of lithium transition metal oxide, olivine-structured lithium-containing phosphate, and modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof. These materials are all commercially available.

The modified compounds of the foregoing materials may be obtained through doping modification and/or surface coating modification to the materials.

The positive electrode film layer usually more optionally includes a binder, a conductive agent, and other optional additives.

As an example, the conductive agent may be one or more of superconductive carbon, acetylene black, carbon black, Ketjen black, carbon dots, carbon nanotubes, conductive carbon black (Super P, SP), graphene, and carbon nanofiber.

As an example, the binder may be one or more of polymerized styrene butadiene rubber (polymerized styrene butadiene rubber, SBR), water-based acrylic resin (water-based acrylic resin), polyvinylidene difluoride (polyvinylidene difluoride, PVDF), polytetrafluoroethylene (polytetrafluoroethylene, PTFE), ethylene-vinyl acetate copolymer (ethylene-vinyl acetate copolymer, EVA), polyacrylic acid (polyacrylic acid, PAA), carboxymethyl cellulose (carboxymethyl cellulose, CMC), polyvinyl alcohol (polyvinyl alcohol, vinylalcohol polymer, PVA), and polyvinyl butyral (polyvinyl butyral, PVB).

### [Negative electrode plate]

In a secondary battery, the negative electrode plate usually includes a negative electrode current collector and a negative electrode film layer provided on the negative electrode current collector, where the negative electrode film layer includes a negative electrode active material.

The negative electrode current collector may be a common metal foil sheet or a composite current collector (for example, the composite current collector may be formed by providing a metal material on a polymer matrix). As an example, a copper foil may be used as the negative electrode current collector.

A specific type of the negative electrode active material is not limited. An active material known in the art can be used as the negative electrode of the secondary battery, and those skilled in the art may select an active material based on actual needs. As an example, the negative electrode active material may include but is not limited to one or more of artificial graphite, natural graphite, hard carbon, soft carbon, silicon-based material, and tin-based material. The silicon-based material may be selected from one or more of elemental silicon, silicon-oxygen compounds (for example silicon monoxide), silicon-carbon compounds, silicon-nitrogen compounds, and silicon alloys. The tin-based material may be selected from one or more of elemental tin, tin-oxygen compounds, and tin alloys. These materials are all commercially available.

In some embodiments, the negative electrode active material may include a silicon-based material to further increase the energy density of the battery.

The negative electrode film layer usually more optionally includes a binder, a conductive agent, and other optional additives.

As an example, the conductive agent may be one or more of superconductive carbon, acetylene black, carbon black, Ketjen black, carbon dots, carbon nanotubes, graphene, and carbon nanofibers.

As an example, the binder may be one or more of styrene butadiene rubber (SBR), water-based acrylic resin (water-based acrylic resin), polyvinylidene difluoride (PVDF), polytetrafluoroethylene (PTFE), ethylene-vinyl acetate copolymer (EVA), polyvinyl alcohol (PVA), and polyvinyl butyral (PVB).

As an example, other optional additives may be a thickener and a dispersant (for example, carboxymethyl cellulose sodium
carboxymethyl cellulose sodium, CMC-Na) and PTC thermistor materials.

### [Electrolyte]

The secondary battery may include an electrolyte, and the electrolyte conducts ions between the positive electrode and the negative electrode. The electrolyte may include electrolytic salt and a solvent.

As an example, the electrolytic salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), and lithium tetrafluoro oxalato phosphate (LiTFOP).

As an example, the solvent may be selected from one or more of ethylene carbonate (ethylene carbonate, EC), propylene carbonate (propylene carbonate, PC), ethyl methyl carbonate (ethyl methyl carbonate, EMC), diethyl carbonate (diethyl carbonate, DEC), dimethyl carbonate (dimethyl darbonate, DMC), dipropyl carbonate (dipropyl carbonate, DPC), methyl propyl carbonate (methyl propyl carbonate, MPC), diisopropyl carbonate (diisopropyl carbonate, EPC), butylene carbonate (butylene carbonate, BC), fluoroethylene carbonate (fluoroethylene carbonate, FEC), methyl formate (methyl formate, MF), methyl acetate (methyl acetate, MA), ethyl acetate (ethyl acetate, EA), n-propyl acetate (n-propyl acetate, PA), methyl propionate (methyl propionate, MP), ethyl propanoate (ethyl propanoate, EP), n-propyl propionate (n-propyl propionate, PP), methyl butyrate (methyl butyrate, MB), ethyl butyrate (ethyl butyrate, EB), 1,4-butyrolactone (1,4-butyrolactone, GBL), tetramethylene sulfone (tetramethylene sulfone, SF), methyl sulfone (methyl sulfone, MSM), methyl ethyl sulfone (methyl ethyl sulfone, EMS), and diethyl sulfone (diethyl sulfone, ESE).

In some embodiments, the electrolyte further includes an additive. For example, the additive may include a negative electrode film-forming additive, or may include a positive electrode film-forming additive, or may include an additive capable of improving some performance of the battery, for example, an additive for improving overcharge resistance performance of the battery, additive for improving high-temperature performance of the battery, or an additive for improving low-temperature performance of the battery.

In some embodiments, the secondary battery may be a lithium-ion secondary battery. In any embodiment of this application, the second base film 12 of the separator 10 faces the negative electrode plate.

The second base film 12 of the separator 10 faces the negative electrode plate, and the second base film 12 has high puncture strength, which can enhance the effect of resisting lithium dendrite puncture and improve the reliability of the secondary battery.

The secondary battery is not particularly limited in shape in the embodiments of this application and may be cylindrical, rectangular, or of any other shapes. FIG. 3 shows a secondary battery 5 with a rectangular structure as an example.

In some embodiments, the secondary battery may include an outer package. The outer package is used for packaging a positive electrode plate, a negative electrode plate, and an electrolyte.

In some embodiments, the outer package of the secondary battery may be a hard shell, for example, a hard plastic shell, an aluminum shell, or a steel shell. The outer package of a secondary battery may alternatively be a soft pack, for example, a soft pouch. The material of the soft pouch may be plastic, such as one or more of polypropylene (polypropylene, PP), polybutylene terephthalate (polybutylene terephthalate, PBT), and polybutylene succinate (polybutylene succinate, PBS).

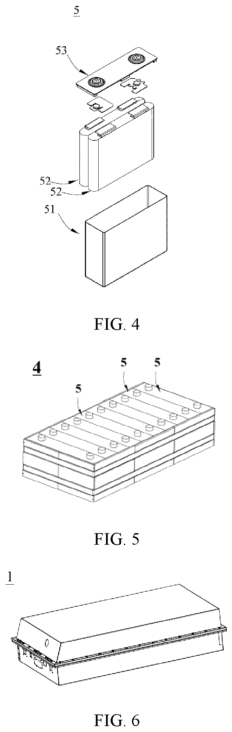

In some embodiments, referring to FIG. 4, the outer package may include a housing body 51 and a cover plate 53. The housing body 51 may include a base plate and a side plate connected onto the base plate, and the base plate and the side plate enclose an accommodating cavity. The housing body 51 has an opening communicating with the accommodating cavity, and the cover plate 53 can cover the opening to close the accommodating cavity.

The preparation method of the secondary battery in this application is well known. In some embodiments, a positive electrode plate, a separator 10, a negative electrode plate, and an electrolyte may be assembled into a secondary battery. For example, the positive electrode plate, the separator 10, and the negative electrode plate may be made into an electrode assembly through winding and/or lamination; and the electrode assembly is placed into an outer package, followed by drying, and the electrolyte is injected, followed by processes such as vacuum packaging, standing, formation, and shaping, to obtain a battery cell. Multiple battery cells may be further connected in series, parallel, or series-parallel to form a battery module. Multiple battery modules may be further connected in series, parallel, or series-parallel to form a battery pack. In some embodiments, the multiple battery cells may alternatively directly form a battery pack.

FIG. 5 shows a battery module 4 as an example. Referring to FIG. 5, in the battery module 4, multiple secondary batteries 5 may be sequentially arranged in a length direction of the battery module 4. It is appreciated that the secondary batteries may alternatively be arranged in any other manners. Further, the multiple secondary batteries 5 may be fastened by using fasteners.

The battery module 4 may alternatively include a housing with an accommodating space, and the multiple secondary batteries 5 are accommodated in the accommodating space.

In some embodiments, the battery module may be further assembled into a battery pack, and a quantity of battery modules included in the battery pack may be adjusted based on application and capacity of the battery pack.

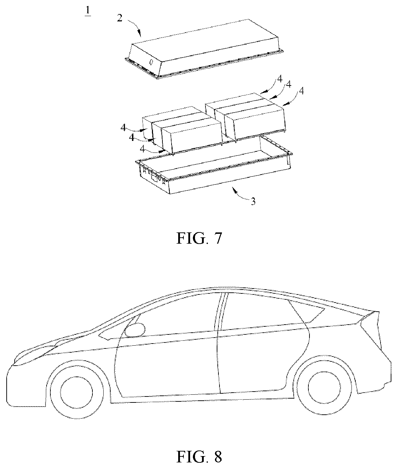

FIGs. 6 and 7 show a battery pack 1 as an example. Referring to FIGs. 6 and 7, the battery pack 1 may include a battery box and multiple battery modules 4 arranged in the battery box. The battery box includes an upper box body 2 and a lower box body 3. The upper box body 2 can cover the lower box body 3 to form an enclosed space for accommodating the battery modules 4. The multiple battery modules 4 may be arranged in the battery box in any manner.

### [Apparatus]

This application also provides an electric apparatus, and the electric apparatus includes the secondary battery of this application. The battery cell, the battery module, or the battery pack may be used as the power source of the apparatus or as the energy storage unit of the apparatus. The apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The battery cell, the battery module, or the battery pack may be selected for the apparatus based on use requirements.

FIG. 8 shows an electric apparatus as an example. The electric apparatus may be a battery electric vehicle, a hybrid electric vehicle, a plug-in hybrid electric vehicle, or the like. To satisfy requirements of the electric apparatus for high power and high energy density of the secondary battery, a battery pack or a battery module may be used.

In another example, the electric apparatus may be a mobile phone, a tablet computer, or a notebook computer. Such electric apparatus is generally required to be light and thin and may use a battery cell as its power source.

The following further describes beneficial effects of this application with reference to examples.

To describe the technical problems resolved by the embodiments of this application, technical solutions, and beneficial effects more clearly, the following further provides descriptions in detail with reference to the embodiments and accompanying drawings. Apparently, the described embodiments are only some but not all of the embodiments of this application. The following description of at least one exemplary embodiment is merely illustrative and definitely is not construed as any limitation on this application or on use of this application. All other embodiments obtained by persons of ordinary skill in the art based on the embodiments of this application without creative efforts shall fall within the scope of this application.

### I. Preparation of separator

### Separator 1:

(1) A first base film and a second base film were provided: the first base film was polypropylene (PP), and the second base film was polyethylene (PE), where a melting point of the first base film was 165°C, and a melting point of the second base film was 135°C. A transverse elongation at break of the first base film was 60%, and a longitudinal elongation at break was 80%. A transverse elongation at break of the second base film was 130%, and a longitudinal elongation at break was 75%. Puncture strength P1 of the first base film was 120 gf, and puncture strength P2 of the second base film was 300 gf; where a ratio P1/P2 of the puncture strength P1 of the first base film to the puncture strength P2 of the second base film was 0.40.
(2) An intermediate layer slurry was prepared: binder polyacrylate, filler particles aluminum oxide, and carboxymethyl cellulose were mixed well at a ratio of 1:4:1 in an appropriate amount of solvent deionized water to prepare an intermediate layer slurry.
(3) The intermediate layer slurry from step (2) was applied to one side of the second base film from step (1) to form an intermediate layer.
(4) The first base film and the coated second base film from step (3) were laminated by hot pressing to obtain a separator, where the intermediate layer was between the first base film and the second base film.

The preparation methods of separators 2-11 were similar to that of separator 1, with the difference in adjustment of one or more of the melting point, substance, transverse elongation at break, longitudinal elongation at break, and puncture strength of the first base film or the second base film, as detailed in Table 1. Other preparation methods were consistent with the preparation method of the separator in Example 1.

### II. Preparation of battery

### Example 1

### 1. Preparation of positive electrode plate

Positive electrode active material LiNi_{0.8}Co_{0.1}Mn_{0.1}O₂ (NCM811), conductive agent carbon black (Super P), and binder polyvinylidene difluoride (PVDF) were mixed well at a mass ratio of 96.2:2.7:1.1 in a solvent N-methylpyrrolidone (N-Methylpyrrolidone, NMP) to obtain a positive electrode slurry. The positive electrode slurry was applied to positive electrode current collector aluminum foil, followed by processes such as drying, cold pressing, slitting, and cutting to obtain a positive electrode plate.

### 2. Preparation of negative electrode plate

Negative electrode active material artificial graphite, conductive agent carbon black (Super P), binder styrene butadiene rubber (SBR), and carboxymethyl cellulose sodium (CMC-Na) were mixed well at a mass ratio of 96.4:0.7:1.8:1.1 in an appropriate amount of solvent deionized water to obtain a negative electrode slurry. The negative electrode slurry was applied to negative electrode current collector copper foil, followed by processes of drying, cold pressing, slitting, and cutting to obtain a negative electrode plate.

### 3. Separator

The separator 1 prepared above was used as the separator.

### 4. Preparation of electrolyte

Ethylene carbonate (EC) and ethyl methyl carbonate (EMC) were mixed at a mass ratio of 30:70 to obtain an organic solvent. Fully dried electrolytic salt LiPF₆ was dissolved in the above mixed solvent, with a concentration of the electrolytic salt being 1.0 mol/L, and was evenly mixed to obtain an electrolyte.

### 5. Preparation of secondary battery

The positive electrode plate, the separator, and the negative electrode plate were stacked in order, with the separator placed between the positive electrode plate and the negative electrode plate for isolation, where the second base film faced the negative electrode plate, and then were wound to obtain an electrode assembly. The electrode assembly was placed in an outer package, and the prepared electrolyte was injected into the dried secondary battery, followed by processes: vacuum sealing, standing, formation, and shaping, to obtain a secondary battery.

The preparation methods of the secondary batteries in Examples 2-9 and Comparative examples 1 and 2 were similar to the preparation method of the secondary battery in Example 1, with the difference in separators (separators 1-9 were used in Examples 1-9, and separators 10 and 11 were used in Comparative examples 1 and 2), as detailed in Table 1.

### III. Battery performance test

### 1. Shallow puncture test (60 min)

The battery was tested at 25°C under a 100% SOC condition. Temperature sensing wires were arranged in the order of a positive pole/a negative pole/a center of a large surface (5 mm above a puncture point)/back of the center of the large surface/cell explosion-proof valve, and the voltage wires were arranged in the order of V positive and negative/V positive needle/V negative needle, with a multi-channel acquisition frequency of ≤0.1S. A high-temperature resistant steel needle with a diameter of 1 mm (with a conical tip angle of 30°) was used to puncture the center of the large surface of the cell at a puncture speed of 0.01 mm/s, until the positive terminal voltage reached 0.5 V, and then continue to penetrate 3 mm deeper, with this position maintained for 1 h. The values displayed on the instrument were observed. A normal voltage without fluctuation indicated the battery was normal and not out of control, and marked as PASS. A voltage fluctuated abnormally indicated that the cell failed and the battery was marked as NP.

### 2. Battery cycling performance (cycles)

At 25°C, the secondary batteries prepared in the examples and the comparative examples were constant-current charged at a rate of 1C to a charge cut-off voltage V1, constant-voltage charged until the current was ≤ 0.05C, left standing for 5 min, constant-current discharged at a rate of 0.33C to a discharge cut-off voltage V2, and left standing for 5 min. This constituted one charge-discharge cycle. The batteries were subjected to the charge and discharge cycling test according to this method until the battery capacity was decayed to 80%. The number of cycles at this point was the cycle life of the battery at 25°C.

**Table 1: test results of battery performance for various examples and comparative examples**

| Serial No. | | | Example 1 | Example 2 | Example 3 | Example 4 | Example 5 | Example 6 | Example 7 | Example 8 | Example 9 | Comparative example 1 | Comparative example 2 |
|---|---|---|---|---|---|---|---|---|---|---|---|---|---|
| | First base film | Melting point (°C) | 165 | 165 | 165 | 165 | 165 | 165 | 165 | 327 | 270 | 165 | 165 |
| | | Substance | PP | PP | PP | PP | PP | PP | PP | PTFE | PET | PP | PP |
| | | Transverse elongation at break (%) | 60 | 60 | 70 | 80 | 85 | 90 | 100 | 160 | 150 | 40 | 60 |
| | | Longitudinal elongation at break (%) | 80 | 80 | 100 | 120 | 130 | 140 | 160 | 600 | 500 | 40 | 80 |
| | | Puncture strength P1 (gf) | 110 | 110 | 160 | 160 | 180 | 210 | 230 | 80 | 150 | 60 | 230 |
| Structure of separator | Second base film | Melting point (°C) | 135 | 135 | 135 | 135 | 135 | 135 | 135 | 135 | 135 | 135 | 135 |
| | | Substance | PE | PE | PE | PE | PE | PE | PE | PE | PE | PE | PE |
| | | Transverse elongation at break (%) | 130 | 110 | 110 | 110 | 110 | 110 | 110 | 110 | 110 | 30 | 30 |
| | | Longitudinal elongation at break (%) | 75 | 70 | 70 | 70 | 70 | 70 | 70 | 70 | 70 | 90 | 120 |
| | | Puncture strength P2 (gf) | 400 | 330 | 380 | 330 | 330 | 330 | 330 | 330 | 330 | 200 | 120 |
| | P1/P2 | | 0.28 | 0.33 | 0.42 | 0.48 | 0.55 | 0.64 | 0.70 | 0.24 | 0.45 | 0.30 | 1.92 |
| Separator performance test | Puncture strength (gf) | | 530 | 470 | 570 | 530 | 540 | 580 | 610 | 430 | 530 | 290 | 400 |
| Battery performance | Shallow puncture test (60 min) | | PASS | PASS | PASS | PASS | PASS | PASS | PASS | PASS | PASS | NP | NP |
| | Battery cycling performance of battery (cycles) | | 3405 | 3254 | 3561 | 3350 | 3387 | 3345 | 3561 | 3260 | 3425 | 3131 | 3048 |

Through comparison between Examples 1-9 and Comparative examples 1 and 2, it can be seen from Table 1 that in Examples 1-9, the melting point of the second base film is lower than the melting point of the first base film, the puncture strength of the second base film is 220 gf-460 gf, and the puncture strength of the separator is 330 gf-620 gf. The battery using the separator of this application can not only pass the shallow puncture test but also increase the number of cycles. In other words, under the same battery performance standards, the battery prepared using the separator provided by this application has higher reliability.

The foregoing descriptions are merely specific embodiments of this application, but are not intended to limit the scope of this application. Any equivalent modifications or replacements readily figured out by a person skilled in the art within the scope disclosed in this application shall fall within the scope of this application. Therefore, the scope of this application shall be subject to the scope of the claims.

## Claims

1. A separator, comprising:
a first base film; and
a second base film, a melting point of the second base film being lower than a melting point of the first base film; wherein
a puncture strength of the second base film is 220 gf-460 gf, and a puncture strength of the separator is 330 gf-620 gf.

2. The separator according to claim 1, wherein a ratio of a puncture strength of the first base film to the puncture strength of the second base film is 0.2-0.95, optionally 0.3-0.75.

3. The separator according to claim 1 or 2, wherein
a puncture strength of the first base film is 100 gf-220 gf; and/or
the puncture strength of the second base film is 260 gf-400 gf.

4. The separator according to any one of claims 1 to 3, wherein the separator satisfies at least one of the following conditions (1) to (4):
(1) a transverse elongation at break of the first base film is 50%-200%, optionally 60%-160%;
(2) a longitudinal elongation at break of the first base film is 40%-700%, optionally 80%-600%;
(3) a transverse elongation at break of the second base film is 40%-220%, optionally 80%-170%; and
(4) a longitudinal elongation at break of the second base film is 30%-100%, optionally 40%-85%.

5. The separator according to any one of claims 1 to 4, wherein
an average fiber diameter of the first base film is 60 nm-300 nm, optionally 80 nm-200 nm; and/or
an average fiber diameter of the second base film is 40 nm-350 nm, optionally 70 nm-180 nm.

6. The separator according to any one of claims 1 to 5, wherein the melting point of the first base film is 155°C-360°C, optionally 160°C-335°C, and/or
the melting point of the second base film is 125°C-260°C, optionally 130°C-220°C.

7. The separator according to any one of claims 1 to 6, wherein
a relative molecular mass of a material of the first base film is 400,000-1,800,000, optionally 500,000-1,300,000; and/or
a relative molecular mass of a material of the second base film is 300,000-1,500,000, optionally 400,000-1,100,000.

8. The separator according to any one of claims 1 to 7, wherein a thickness of the first base film is greater than or equal to a thickness of the second base film; and optionally, a ratio of the thickness of the first base film to the thickness of the second base film is 1.02-5, preferably 1.1-3.0.

9. The separator according to any one of claims 1 to 8, wherein
a thickness of the first base film is 2 µm-14 µm, optionally 3 µm-9 µm, and/or
a thickness of the second base film is 2 µm-12 µm, optionally 3 µm-7 µm.

10. The separator according to any one of claims 1 to 9, wherein the separator further comprises an intermediate layer, the intermediate layer is disposed between the first base film and the second base film, and the intermediate layer comprises a binder; and optionally, the intermediate layer comprises a binder and filler particles.

11. The separator according to claim 10, wherein the binder comprises one or more of polyacrylate, polyacrylic acid, polytetrafluoroethylene, polyvinylidene difluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl branched starch; and/or
the filler particles comprise at least one type of particles among inorganic particles, organic particles, and organic-metal framework materials.

12. The separator according to any one of claims 1 to 11, wherein the separator satisfies at least one of the following (1) to (5):
(1) the puncture strength of the separator is 330 gf-630 gf, optionally 400 gf-600 gf;
(2) a transverse tensile strength of the separator is ≥ 700 kg/cm², optionally 1000 kg/cm²-1900 kg/cm²;
(3) a longitudinal tensile strength of the separator is ≥ 1000 kg/cm², optionally 1200 kg/cm²-2200 kg/cm²;
(4) a transverse thermal shrinkage rate of the separator at 250°C for 1 h is ≤ 3%, optionally ≤ 2.0%; and
(5) a longitudinal thermal shrinkage rate of the separator at 250°C for 1 h is ≤ 3%, optionally ≤ 2.0%.

13. A secondary battery, comprising the separator according to any one of claims 1 to 12.

14. The separator according to claim 13, comprising a positive electrode plate and a negative electrode plate, wherein the separator is disposed between the positive electrode plate and the negative electrode plate, and the second base film faces the negative electrode plate.

15. An electric apparatus, comprising the secondary battery according to claim 13 or 14.
